(19) Europäisches Patentamt
European Patent Office
Office européen des brevets

(11) **EP 2 380 760 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(51) Int Cl.:
**B60G 7/00** *(2006.01)*  **B60G 17/015** *(2006.01)*
**B60G 17/018** *(2006.01)*  **B62D 17/00** *(2006.01)*

(21) Anmeldenummer: **11003395.8**

(22) Anmeldetag: **21.04.2011**

(54) **Verfahren zum Betreiben einer mechatronischen Fahrwerkeinrichtung eines Kraftfahrzeugs**

Method for operating a mechatronic suspension device of an automobile

Procédé destiné au fonctionnement d'un dispositif de châssis mécatronique d'un véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2010 DE 102010018135**

(43) Veröffentlichungstag der Anmeldung:
**26.10.2011 Patentblatt 2011/43**

(73) Patentinhaber: **AUDI AG**
**85045 Ingolstadt (DE)**

(72) Erfinder:
• **Müller, Hugo**
**86701 Rohrenfels- Ballersdorf (DE)**
• **Kossira, Christoph**
**85053 Ingolstadt (DE)**

• **Michel, Wilfried**
**93339 Riedenburg (DE)**
• **Meitinger, Karl-Heinz, Dr.**
**81667 München (DE)**
• **Schmid, Wolfgang**
**85354 Freising (DE)**

(74) Vertreter: **Patzelt, Heike Anna Maria**
**AUDI AG**
**Patentabteilung**
**Postfach 11 44**
**74148 Neckarsulm (DE)**

(56) Entgegenhaltungen:
**EP-A1- 2 163 412      WO-A1-2009/052914**
**DE-A1- 10 064 585      DE-A1-102007 024 755**

EP 2 380 760 B1

**Beschreibung**

Die Erfindung betrifft eine Radaufhängung für ein Kraftfahrzeug mit den Merkmalen des Oberbegriffs von Patentanspruch 1 sowie ein Kraftfahrzeug mit den Merkmalen gemäß Patentanspruch 3.

Radaufhängungen mit verstellbaren Sturz- und Spurwinkeln sind hinlänglich bekannt. So ist aus der DE 10 2007 024 755 A1 eine solche Radaufhängung mit einem an einem Radträger gelagerten Rad zu entnehmen, wobei der Radträger über an diesem angelenkte Lenker an einem Hinterachsträger angebunden ist. Ein Querlenker ist im Wesentlichen oberhalb des Radträgers angeordnet und ein sogenannter Spurlenker ist am hinteren Ende des Radträgers angelenkt. Sowohl der Querlenker als auch der Spurlenker sind mittels Aktuatoren derart einstellbar, dass der Sturz- und Spurwinkel des Rads eingestellt werden kann.

Aus der DE 100 64 585 A1 ist ebenfalls eine Radaufhängung mit verstellbaren Sturz- und Spurwinkeln zu entnehmen. Ein Rad ist an einem Achsschenkel angeordnet, wobei der Achsschenkel wiederum derart über ein Antriebselement mit einem Antrieb verbunden ist, dass mittels des Antriebs der Sturz- und Spurwinkel eingestellt werden kann.

Eine Radaufhängung nach den Merkmalen des Oberbegriffs des Patentanspruchs 1 ist aus der WO 2009/052914 A1 bekannt. Diese Radaufhängung hat die Eigenschaft, dass eine Vielzahl von möglichen Kombinationen von Spurwinkel eines Rades sowie Sturzwinkel des selben Rades einstellbar sind. Definiert man Ortspunkte bezüglich des Rades, so durchlaufen diese Ortspunkte beim Verstellen des Spurwinkels sowie des Sturzwinkels des Rades eine geschlossene, gekrümmte Fläche, die im Koordinatensystem des Kraftfahrzeugs definiert ist.

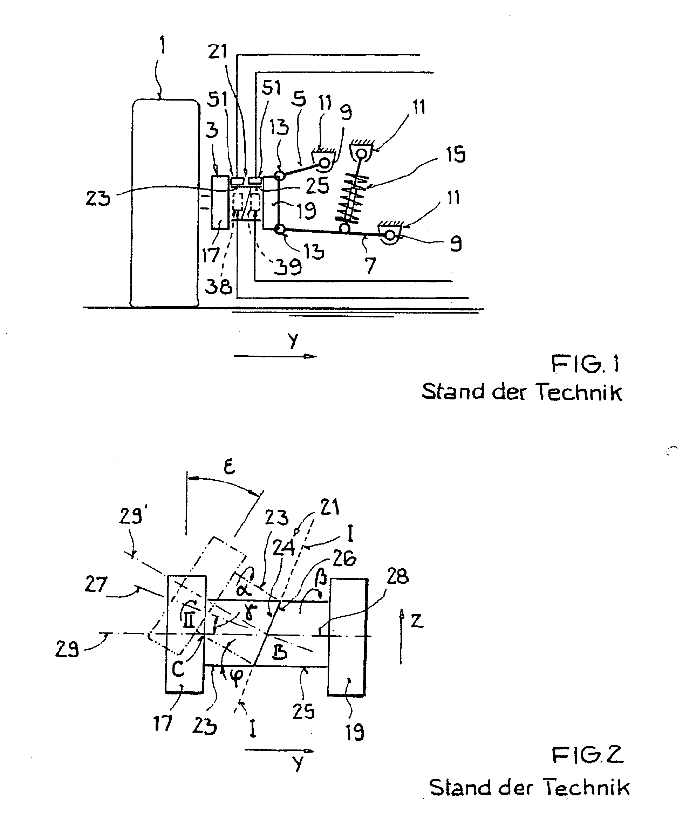

Die aus der WO 2009/052914 A1 bekannte Fahrwerkeinrichtung ermöglicht das Einstellen von Spur- bzw. Sturzwinkel auf besonders einfache, mechanisch unaufwändige Weise. Die Radaufhängung für Kraftfahrzeuge aus der WO 2009/052914 A1 in den Figuren 1 und 2 der vorliegenden Anmeldung dargestellt. Ein Radträger 3 weist ein radseitiges, ein Fahrzeugrad 1 drehbar lagerndes Tragelement 17 und ein achsseitiges Tragelement 19 auf. Zwischen diese ist ein Stellglied 21 geschaltet. Dieses weist ein radseitiges Drehteil 23 und ein achsseitiges Drehteil 25 auf, welche um jeweilige Drehachsen 27, 28 zueinander verdrehbar sind (vgl. Fig. 2). Bei einer Drehung um einen Drehwinkel $\alpha$ bewegt sich das Drehteil 23 mit einer Taumelbewegung um die Drehachse 27. Gleichzeitig oder versetzt kann das Drehteil 25 um einen Drehwinkel $\beta$ gegenüber dem Tragelement 19 gedreht werden. Beim Verdrehen der beiden Drehteile 23, 25 wird das radseitige Drehteil 23 um einen Schwenkwinkel $\varphi$ gegenüber dem achsseitigen Drehteil 25 ausgelenkt. Dadurch kann durch ein geeignetes Einstellen der Drehwinkel $\alpha$ und $\beta$ der jeweiligen Drehteile 23, 25 ein gewünschter Spur- und/oder Sturzwinkel $\delta$ und $\varepsilon$ des Rades 1 eingestellt werden.

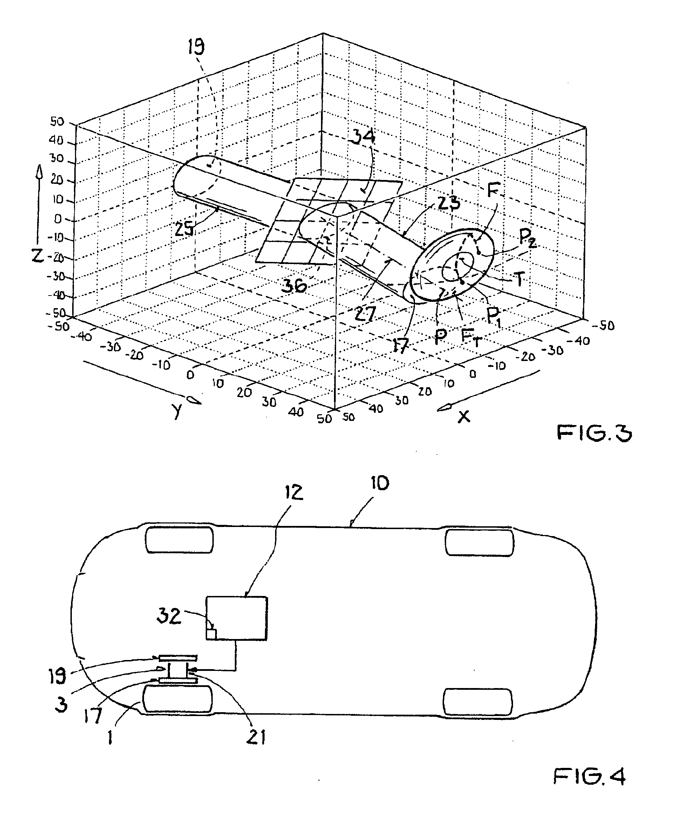

Eine Drehebene 34 ist die Ebene, in der sich bei Drehung um die Achse 27 eine Kontaktfläche 36 zwischen den beiden Drehteilen 23 und 25 dreht. Verlängert man nun die Drehachse 27 und legt einen Punkt P auf dieser verlängerten Drehachse 27 fest, so lässt sich eine Fläche F definieren, die im in Fig. 3 gezeigten Koordinatensystem des Kraftwagens bzw. des achsseitigen Tragelements 19 definiert ist, und die angibt, welche bezüglich des Kraftfahrzeugs definierte Ortspunkte der Punkt P der Drehachse 27 bei unterschiedlichen Einstellungen der Drehwinkel $\alpha$ und $\beta$ durchläuft. Die Fläche F ist gekrümmt und ist in der Draufsicht kreisförmig.

Aus der Beziehung der Drehwinkel $\alpha$ und $\beta$ zu einem Spur- und/oder Sturzwinkel $\delta$ und $\varepsilon$ folgt insbesondere, dass eine jeweilige Winkelgeschwindigkeit $\dfrac{d\alpha}{dt}, \dfrac{d\beta}{dt}$ für unterschiedliche Werte der Drehwinkel $\alpha$ bzw. $\beta$ nicht in einem konstanten Verhältnis zu den jeweiligen Winkelgeschwindigkeiten $\dfrac{d\delta}{dt}, \dfrac{d\varepsilon}{dt}$ für die jeweiligen unterschiedlichen Werte der Drehwinkel $\alpha$ bzw. $\beta$ steht:

$$\frac{d\alpha}{dt} \Big/ \frac{d\delta}{dt} \neq c \; ; \; \frac{d\alpha}{dt} \Big/ \frac{d\varepsilon}{dt} \neq c \; ; \; \frac{d\beta}{dt} \Big/ \frac{d\delta}{dt} \neq c \; ; \; \frac{d\beta}{dt} \Big/ \frac{d\varepsilon}{dt} \neq c \qquad (1)$$

Wenn die Drehwinkel $\alpha$ und $\beta$ bestimmte Werte haben, sodass ein bestimmter Spurwinkel $\delta$ und ein bestimmter Sturzwinkel $\varepsilon$ eingestellt ist, und wenn dann durch ein Fahrdynamiksystem, das die mechatronische Fahrwerkeinrichtung betreibt, ein neuer Spur- oder auch ein neuer Sturzwinkel eingestellt werden sollen, so können die in der obigen Formel (1) auftretenden Verhältnisse der Winkelgeschwindigkeiten so groß sein, dass die Spur-oder Sturzwinkel nicht rasch eingestellt werden können.

Ein solches Fahrdynamiksystem soll dazu dienen, in vorbestimmten Fahrsituationen kurzfristig den Spurwinkel oder den Sturzwinkel einzustellen, um dadurch unter den vorherrschenden Bedingungen für eine erhöhte Stabilität des Kraftfahrzeugs zu sorgen. Hier ist es essentiell, dass der Spur- und der Sturzwinkel relativ schnell oder innerhalb einer bestimmten Zeit eingestellt werden können.

Es ist deshalb Aufgabe der vorliegenden Erfindung, eine Vorrichtung bereitzustellen, die ein besonders schnelles Einstellen eines Spur- bzw. Sturzwinkels eines Rades ermöglicht.

Die Aufgabe wird durch eine Radaufhängung mit den Merkmalen gemäß Patentanspruch 1 sowie durch ein Kraftfahrzeug gemäß Patentanspruch 3 gelöst.

Die erfindungsgemäße Radaufhängung ist somit dadurch gekennzeichnet, dass das Fahrzeugrad um einen festgelegten Winkel verkippt an dem das Fahrzeugrad drehbar lagernden Tragelement gelagert ist. In einer Neutralstellung des Radträgers, in welcher jeweilige Längsachsen der beiden Drehteile wenigstens annähernd parallel verlaufen, ist damit das Rad verkippt an dem Radträger angeordnet.

Vorteilhafterweise ist dabei bereits ein positiver Sturz des Rades eingestellt. Wird das Rad nun in seine Neutralstellung gebracht, in welcher Spurwinkel und Sturzwinkel des Rades 0° entsprechen, so weisen die jeweiligen Drehwinkel $\alpha$ und $\beta$ Werte auf, für welche jederzeit ein rasches Einstellen eines neuen Spur- und/oder Sturzwinkel $\delta$ und $\varepsilon$ möglich ist. In der Neutralstellung des Rades ist somit stets ein schnelles Durchführen einer Anforderung eines Fahrerassistenzsystems gewährleistet.

Bevorzugt wird bei der Erfindung die mechatronische Fahrwerkeinrichtung aus der WO 2009/052914 A1 eingesetzt. Deren Eigenschaft ist, dass sich jeweils eine Kombination von Spurwinkeln und Sturzwinkeln durch Einstellen zweier Drehwinkel der mechatronischen Fahrwerkeinrichtung ergibt. Das Einstellen zweier Drehwinkel geht mit einem besonders einfachen Aufbau einher, weil zugehörige Stellmotoren nicht übermäßig groß bauen müssen, sondern vielmehr kompakt in dem Fahrwerk unterbringbar sind.

Bevorzugt ist das Fahrzeugrad um einen Winkel zwischen 0,1 bis 3° verkippt an dem das Fahrzeugrad drehbar lagernden Tragelement gelagert. Für diese Kippwinkel ist besonders gut gewährleistet, dass aus der Neutralstellung des Rades rasch ein neuer Spur- und/oder Sturzwinkel $\delta$ und $\varepsilon$ einstellbar ist.

Die Teilfläche oder der Teilraum kann so gewählt werden, dass gewährleistet ist, dass ausgehend von der Neutralstellung des Rades oder von anderen Radstellungen, bei welchen die Drehwinkeln $\alpha$ und $\beta$ erlaubte Werte haben, nicht ein Spur- und/oder Sturzwinkel $\delta$ und $\varepsilon$ des Rades einstellbar ist, bei welchem die jeweiligen Längsachsen der beiden Drehteile annähernd parallel zueinander verliefen, also in ihrer Neutralstellung wären. In dieser Neutralstellung haben die in Gleichung (1) dargestellten Verhältnisse nämlich besonders große Werte als Lösungen, so dass das Einstellen des Spur- und/oder Sturzwinkels $\delta$ und $\varepsilon$ besonders lange dauern könnte. Durch Verhindern der Neutralstellung der beiden Drehteile ist also gewährleistet, dass der Spur- und/oder Sturzwinkel $\delta$ und $\varepsilon$ stets rasch eingestellt wird.

Beim Betrieb der Radaufhängung kann ein Verfahren durchgeführt werden, das dadurch gekennzeichnet ist, dass eine Teilfläche der geschlossenen Fläche oder ein Teilraum des geschlossenen dreidimensionalen Raums ausgewählt wird oder ist, und dass der Spur- und der Sturzwinkel zumindest in vorbestimmten Fahrsituationen nur in solchen Kombinationen eingestellt werden, welche Ortspunkten in der Teilfläche bzw. dem Teilraum entsprechen.

Mit anderen Worten wird bewusst davon abgesehen, sämtliche Bewegungsmöglichkeiten, die die mechatronische Fahrwerkeinrichtung bietet, auszunutzen. Die Teilfläche bzw. der Teilraum ist insbesondere so auswählbar, dass Trajektorien innerhalb dieser Teilfläche bzw. dieses Teilraums schnell durchlaufbar sind.

Die Teilfläche bzw. der Teilraum lässt sich z. B. so auswählen, dass niemals ein positiver Sturzwinkel eingestellt wird, also stets negative Sturzwinkel eingestellt werden. Und es wird vermieden, dass es Trajektorien in der geschlossenen Fläche bzw. dem geschlossenen Raum gibt, bei denen von einem positiven in einen negativen Sturzwinkel übergegangen wird; solche Trajektorien können mit einer besonders geringen Einstellgeschwindigkeit einher gehen.

Bei dem erfindungsgemäßen Kraftfahrzeug ist eine Steuereinrichtung vorgesehen, die zum Einstellen des Spurwinkels und des Sturzwinkels mittels des Stellglieds der Radaufhängung nach Patentanspruch 1 vorgesehen ist, und die das erfindungsgemäße Verfahren realisiert. Die Steuereinrichtung dient der physikalischen Realisierung des Fahrdynamiksystems bzw. Fahrdynamikregelsystems. Gegebenenfalls sind Sensoren vorgesehen, die Informationen über die Fahrsituation liefern, und in Abhängigkeit von der jeweiligen Fahrsituation wird dann durch die Steuereinrichtung der Spur- und Sturzwinkel jeweils neu eingestellt, also der jeweils eingestellte Winkel geändert.

Fig. 1 und 2 in jeweiligen schematischen Schnittdarstellungen eine Radaufhängung gemäß dem Stand der Technik veranschaulichen,

Fig. 3 eine schematische Darstellung des Bewegungsraumes ist, der erfindungsgemäß eingeschränkt wird,

Fig.4 schematisch ein Fahrzeug mit einer Radaufhängung zeigt.

In Fig. 4 sind schematisch auszugsweise einige aus dem Stand der Technik gemäß den Fig. 1 und 2 bekannten Teile einer Radaufhängung eines Kraftfahrzeugs 10 dargestellt. So erkennt man das Fahrzeugrad 1 und die beiden Tragelemente 17, 19 des Radträgers 3. Auch das Stellglied 21, welches zwischen die Tragelemente 17, 19 geschaltet ist, ist dargestellt.

Neu im Vergleich zu dem durch die Fig. 1 und 2 veranschaulichten Stand der Technik ist, dass das Fahrzeugrad 1 vorliegend um einen Winkel verkippt an dem Tragelement 17 gelagert ist (nicht erkennbar in Fig. 4). Das Fahrzeugrad 1 ist also bereits mit einem positiven Sturzwinkel an dem Radträger 3 angeordnet. Beispielsweise kann der Kippwinkel 0,1 bis 3° betragen, er kann aber auch andere geeignete Werte annehmen.

Das Kraftfahrzeug 10 weist zur Realisierung eines Fahrerdynamikregelsystems eine Steuereinrichtung 12 auf, welche beispielsweise in einer bestimmten Fahrsituation einen Spur- und/oder Sturzwinkel $\delta$ und $\varepsilon$ berechnet, welcher mittels des Stellglieds 21 eingestellt werden soll.

Neu im Vergleich zu dem durch die Fig. 1 und 2 veranschaulichten Stand der Technik ist außerdem, dass in einem Speicher 32 eine Mehrzahl von Kombinationen für den Spurwinkel $\delta$ und den Sturzwinkel $\varepsilon$ hinterlegt ist. Diese Mehrzahl von Kombinationen entspricht einer Teilfläche $F_T$ der Fläche F für die möglichen Ortspunkte, die der Punkt P an der Drehachse 27 durchlaufen kann.

Durch geeignete Auswahl der hinterlegten Werte für die jeweiligen Winkel $\delta$ und $\varepsilon$ wird erreicht, dass beispielsweise der Radträger 3 niemals seine Neutralstellung erreicht, in welcher die Längsachsen der Drehteile 23, 25 zumindest annähernd parallel zueinander verlaufen. So ist gewährleistet, dass ein neuer Spur- und/oder Sturzwinkel $\delta$ und $\varepsilon$ stets sehr schnell eingestellt wird.

Statt in dem Speicher 32 konkrete Werte abzulegen, kann auch eine mathematische Beziehung angegeben sein.

## Patentansprüche

1. Radaufhängung für ein Kraftfahrzeug, mit einem Radträger (3), welcher ein radseitiges, ein Fahrzeugrad (1) drehbar lagerndes Tragelement (17) und ein achsseitiges Tragelement (19) aufweist, zwischen denen ein Stellglied (21) geschaltet ist, bei dessen Betätigung das radseitige Tragelement (17) zur Einstellung eines Spur- und/oder Sturzwinkels ($\delta$, $\varepsilon$) um einen Schwenkwinkel ($\varphi$) gegenüber dem achsseitigen Tragelement (19) verschwenkbar ist, wobei das Stellglied (21) ein radseitiges Drehteil (23) und ein achsseitiges Drehteil (25) aufweist, die um ihre Drehachsen zueinander verdrehbar sind, und wobei das radseitige Drehteil (23) beim Verdrehen der beiden Drehteile (23, 25) um den Schwenkwinkel ($\varphi$) gegenüber dem achsseitigen Drehteil (25) auslenkbar ist, **dadurch gekennzeichnet, dass** das Fahrzeugrad (1) um einen festgelegten Winkel verkippt an dem das Fahrzeugrad (1) drehbar lagernden Tragelement (17) gelagert ist.

2. Radaufhängung nach Anspruch 1, **dadurch gekennzeichnet, dass** das Fahrzeugrad (1) um einen Winkel von zwischen 0.1° bis 3° verkippt an dem das Fahrzeugrad (1) drehbar lagernden Tragelement (17) gelagert ist.

3. Kraftfahrzeug mit einer Radaufhängung nach Anspruch 1 oder 2, wobei die Radaufhängung das Einstellen eines Spurwinkels eines Rades in solchen Kombinationen ermöglicht, welche bezüglich des Rades definierten Ortspunkten in einer geschlossenen Fläche (F) entsprechen, **gekennzeichnet durch** eine Steuereinrichtung zum Einstellen des Spurwinkels ($\delta$) und des Sturzwinkels ($\varepsilon$) mittels des Stellglieds (21), wobei die Steuereinrichtung (12) ausgelegt ist, zumindest in vorbestimmten Fahrsituationen den Spurwinkel ($\delta$) und den Sturzwinkel ($\varepsilon$) nur in solchen Kombinationen einzustellen, welche Ortspunkten in einer Teilfläche ($F_T$) der Fläche entsprechen.

## Claims

1. Wheel suspension for a motor vehicle, having a wheel support (3) which comprises a wheel-side support element (17) providing a rotatable mounting for a vehicle wheel (1), and an axle-side support element (19), between which a positioning member (21) is connected, the actuation of which causes the wheel-side support element (17) to be pivoted by a pivot angle ($\varphi$) relative to the axle-side support element (19) in order to select a toe and/or camber angle ($\delta$, $\varepsilon$), the positioning member (21) comprising a wheel-side rotary part (23) and an axle-side rotary part (25) which are rotatable relative to one another about their rotation axes, the wheel-side rotary part (23) being deflectable relative to the axle-side rotary part (25) by the pivot angle ($\varphi$) as the two rotary parts (23, 25) rotate, **characterised in that** the vehicle wheel (1), tilted at a specified angle, is mounted on the support element (17) that provides the rotatable mounting for the vehicle wheel (1).

**2.** Wheel suspension according to claim 1, **characterised in that** the vehicle wheel (1), tilted at an angle of between 0.1° and 3°, is mounted on the support element (17) that provides the rotatable mounting for the vehicle wheel (1).

**3.** Motor vehicle having a wheel suspension according to claim 1 or 2, wherein the wheel suspension makes it possible to select a toe angle for a wheel in combinations that correspond to points in a closed area (F) that are defined relative to the wheel, **characterised by** a control device for selecting the toe angle ($\delta$) and the camber angle ($\varepsilon$) by means of the positioning member (21), the control device (12) being designed to select the toe angle ($\delta$) and the camber angle (s), at least in predetermined driving situations, only in combinations that correspond to points in a part ($F_T$) of the area.

**Revendications**

**1.** Suspension de roue pour un véhicule automobile, comprenant un support de roue (3), qui présente un élément porteur situé côté roue (17), supportant en rotation une roue de véhicule (1) et un élément porteur situé côté essieu (19), entre lesquels un organe de réglage (21) est placé, lors de l'actionnement duquel l'élément porteur situé côté roue (17) servant à régler un angle de pincement et/ou un angle de carrossage ($\delta$, $\varepsilon$) peut être pivoté selon un angle de pivotement ($\varphi$) par rapport à l'élément porteur situé côté essieu (19), où l'organe de réglage (21) présente une partie rotative située côté roue (23) et une partie rotative située côté essieu (25), lesquelles peuvent être tournées l'une par rapport à l'autre autour de leurs axes de rotation, et où la partie rotative située côté roue (23) peut être déviée, lors de la rotation des deux parties rotatives (23, 25), selon l'angle de pivotement ($\varphi$) par rapport à la partie rotative située côté essieu (25),
**caractérisée en ce**
**que** la roue de véhicule (1) est montée au niveau de l'élément porteur (17) supportant en rotation la roue de véhicule (1) en étant basculée selon un angle spécifié.

**2.** Suspension de roue selon la revendication 1, **caractérisée en ce**
**que** la roue de véhicule (1) est montée au niveau de l'élément porteur (17) supportant en rotation la roue de véhicule (1) en étant basculée selon un angle allant de 0,1° à 3°.

**3.** Véhicule automobile comprenant une suspension de roue selon la revendication 1 ou 2, où la suspension de roue permet le réglage d'un angle de pincement d'une roue selon des combinaisons telles qu'elles correspondent à des points fixes définis par rapport à la roue dans une surface (F) fermée,
**caractérisé par**
un dispositif de commande servant à régler l'angle de pincement ($\delta$) et l'angle de carrossage ($\varepsilon$) au moyen de l'organe de réglage (21), où le dispositif de commande (12) est configuré pour régler au moins dans des situations de conduite prédéterminées l'angle de pincement ($\delta$) et l'angle de carrossage ($\varepsilon$) uniquement dans des combinaisons telles qu'elles correspondent à des points fixes dans une surface partielle ($F_T$) de la surface.

FIG. 1
Stand der Technik

FIG. 2
Stand der Technik

FIG.3

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007024755 A1
- DE 10064585 A1
- WO 2009052914 A1